# EUROPÄISCHE PATENTANMELDUNG

(11) **EP 3 937 102 A1**
(43) Veröffentlichungstag der Anmeldung: **12.01.2022**
(21) Anmeldenummer: 21183162.3
(22) Anmeldetag: 01.07.2021
(51) Int. Cl.: G06Q 10/06

(54) **EINRICHTUNG ZUR ZUWEISUNG VON ARBEITSRESSOURCEN**

(30) Priorität: 06.07.2020 DE 202020103900 U
(71) Anmelder: TABEL Verwaltungs- und Beteiligungs GmbH & Co. KG, 30880 Laatzen (DE)
(72) Erfinder: TABEL, Rüdiger, 30900 Wedemark (DE)
(74) Vertreter: Gramm, Lins & Partner Patent- und Rechtsanwälte PartGmbB

(57) **Zusammenfassung**

Die vorliegende Erfindung umfasst Einrichtung (1) zur Zuweisung von Arbeitsressourcen in einem Bearbeitungsprozess, wobei für gleichartige Bearbeitungsprozesse, die gleichzeitig vorgenommen werden können, mehrere Raumbereiche (2) vorhanden sind und Arbeitsmittel zur Bearbeitung in jeweils einen zugewiesenen Raumbereich (2) befördert werden, wobei eine zentrale Zuweisungseinheit (4), die mit entfernten Eingabeeinheiten (6) zur Reservierung eines Bearbeitungsprozesses zu ausgewählten Zeiten verbindbar ist und die zur Übersendung von Zuweisungsnachrichten an für die reservierten Arbeitsressourcen erforderlichen Arbeitsmittel (7) und zur Festlegung der Zuweisung der Arbeitsressourcen an die empfangenen reservierten Bearbeitungsprozesse nach Erhalt mindestens einer Bestätigungsnachricht von den reservierten Arbeitsmitteln (7) eingerichtet ist.

## Beschreibung

Die Erfindung betrifft eine Einrichtung zur Zuweisung von Arbeitsressourcen in einem Bearbeitungsprozess, wobei für gleichartige Bearbeitungsprozesse, die gleichzeitig vorgenommen werden können, mehrere Raumbereiche vorhanden sind und Arbeitsmittel zur Bearbeitung in jeweils einen zugehörigen Raumbereich befördert werden.

Zur Durchführung von Bearbeitungsprozessen ist eine optimale Ausnutzung der verfügbaren Arbeitsressourcen in den vorhandenen Raumbereichen erwünscht. Zur Sicherstellung eines optimalen Ablaufs von Bearbeitungsprozessen ist es hilfreich, wenn diese möglichst automatisch in einem vernetzten Computersystem geplant und koordiniert werden.

Aufgabe der vorliegenden Erfindung ist es daher, eine verbesserte Einrichtung zur Zuweisung von Arbeitsressourcen in einem Bearbeitungsprozess zu schaffen.

Die Aufgabe wird mit der Einrichtung mit den Merkmalen des Anspruchs 1 gelöst. Vorteilhafte Ausführungsformen sind in den Unteransprüchen beschrieben.

Es wird vorgeschlagen, dass die gattungsgemäße Einrichtung eine zentrale Zuweisungseinheit hat, die mit entfernten Eingabeeinheiten zur Reservierung eines Bearbeitungsprozesses zu ausgewählten Zeiten verbindbar ist und die zur Übersendung von Zuweisungsnachrichten an die für die reservierten Arbeitsressourcen erforderlichen Arbeitsmittel und zur Festlegung der Zuweisung der Arbeitsressourcen an die empfangenen reservierten Bearbeitungsprozesse nach Erhalt mindestens einer Bestätigungsnachricht von den reservierten Arbeitsmitteln eingerichtet ist.

Die Durchführung der Bearbeitungsprozesse wird dabei dezentral geplant. Die Vielzahl dezentraler entfernter Eingabeeinheiten übersendet dann jeweils über ein Datennetzwerk, wie beispielsweise das Internet, eine Reservierungsanforderung für einen Bearbeitungsprozess an eine zentrale Zuweisungseinheit. Diese ist dann durch geeignete Programmierung eingerichtet zu überprüfen, ob ein geeigneter Raumbereich zur Durchführung des Bearbeitungsprozesses in dem gewünschten Zeitraum verfügbar ist. Wenn dies der Fall ist, übersendet die zentrale Zuweisungseinheit eine Zuweisungsnachricht an mindestens ein für die reservierten Arbeitsressourcen erforderliches Arbeitsmittel. Wenn die zur Durchführung des Bearbeitungsprozesses in dem gewünschten Zeitraum benötigten und angefragten Arbeitsmittel verfügbar sind, senden diese eine Bestätigungsnachricht an die zentrale Zuweisungseinheit und im ablehnenden Fall eine Ablehnungsnachricht. Die zentrale Zuweisungseinheit ist dann zur Festlegung der Zuweisung der Arbeitsressourcen für den empfangenen reservierten Bearbeitungsprozess eingerichtet, wenn von den zur Durchführung des reservierten Bearbeitungsprozesses notwendigen Arbeitsmitteln mindestens eine Bestätigungsnachricht erhalten worden ist.

Wenn für die Durchführung des Bearbeitungsprozesses mehrere Arbeitsmittel zwingend notwendig sind, erfolgt die Zuweisung der Arbeitsressourcen vorteilhafterweise nur dann, wenn von allen notwendigen Arbeitsressourcen eine Bestätigungsnachricht empfangen wurde.

Der Raumbereich und mindestens ein Arbeitsmittel bilden im Sinne der vorliegenden Erfindung eine Arbeitsressource für den zu dem geplanten Zeitpunkt durchzuführenden Bearbeitungsprozess.

Mit dieser Einrichtung ist eine sehr flexible, voll automatische Planung einer Vielzahl von Bearbeitungsprozessen in einer Vielzahl von Raumbereichen unter Verwendung einer Vielzahl von Arbeitsmitteln möglich. Dies erlaubt eine sehr flexible Zuweisung der Arbeitsressourcen zu einem geplanten Bearbeitungsprozess, einschließlich der Zuweisung von Raumbereichen und Arbeitsmitteln, um die Arbeitsmittel und die Raumbereiche sowie sonstige zur Bearbeitung notwendigen Objekte oder Personen zusammenzuführen.

Die Einrichtung kann zur Abrechnung der zugewiesenen Arbeitsressourcen nach der Zuweisung der Arbeitsressourcen eingerichtet sein. So ist es möglich, die Nutzung der zugewiesenen Raumbereiche individuell nach der Planung und Zuweisung der in mindestens einem Raumbereich zur Durchführung des Bearbeitungsprozesses nutzenden Arbeitsmittel in Rechnung zu stellen. Damit lassen sich die zur Durchführung des Bearbeitungsprozesses anfallenden Kosten übersichtlich abrechnen und aufteilen. Die Weiterberechnung der den Arbeitsmitteln in Rechnung gestellten Kosten kann dann in einem Folgeprozess von den Arbeitsmitteln selbst erfolgen.

Die Einrichtung kann aber auch selbst zur Reservierung und Abrechnung von Arbeitsmitteln für die zugewiesenen Arbeitsressourcen eingerichtet sein. So ist denkbar, dass für einen Arbeitsprozess benötigte Arbeitsmittel bzw. Gerätschaften, wie beispielsweise für Kosmetikbehandlungen oder Frisördienstleistungen genutzte Permanent-Make-Up-Maschinen, Laser, Dampfreiniger etc. oder für eine Physiotherapie genutzte Gerätschaften, über die Kommunikationsplattform der Einrichtung zusätzlich reservierbar (mit buchbar), vermietet und abgerechnet werden können.

Die Einrichtung kann mindestens ein Display haben und zur Anzeige der zugewiesenen Arbeitsressourcen zu der reservierten Zeit ausgebildet sein. Damit gelingt es, auf übersichtliche Weise die zur Durchführung jeweils eines Bearbeitungsprozesses notwendigen Arbeitsressourcen in dem zur Durchführung des Bearbeitungsprozesses reservierten Raumbereich zusammenzuführen. Dies beinhaltet die Zusammenführung der zur Bearbeitung notwendigen Werkzeuge, Objekte und Personen in dem reservierten Raumbereich.

In den Raumbereichen kann jeweils mindestens ein Display angeordnet sein, das zur Anzeige der dem Raumbereich zugewiesenen Arbeitsressourcen und der zugehörigen Zeit zur Durchführung der jeweiligen Bearbeitungsprozesse eingerichtet ist. Damit ist in dem jeweiligen Raumbereich die z. B. tages- oder stundenabhängige Planung der Nutzung des Raumbereichs für aufeinander folgende Bearbeitungsprozesse wahrnehmbar.

Mithilfe der Displays gelingt es, die zur Durchführung eines Bearbeitungsprozesses in einem Raumbereich notwendigen Personen und Objekte zu steuern, um so die vorgeplante Abfolge von Bearbeitungsprozess pro Raumbereich sicherzustellen.

Die Einrichtung kann zur Anpassung der für bereits zugewiesene Arbeitsressourcen reservierten Raumbereiche derart eingerichtet sein, dass die Ausnutzung der Raumbereiche erhöht und der Wechsel von Arbeitsressourcen zwischen Raumbereichen für aufeinanderfolgende Bearbeitungsprozesse reduziert wird.

Damit ist die Einrichtung zur iterativen Anpassung der Zuweisung von Bearbeitungsprozessen zu Raumbereichen eingerichtet, um durch Änderung der Zuordnung von bereits vorgeplanten und bestätigten Bearbeitungsprozessen zu wechselnden Raumbereichen die Auslastung der Raumbereiche zu optimieren und dabei den Wechsel von Arbeitsressourcen zwischen Raumbereichen zu reduzieren. Auf diese Weise gelingt es, den Rüstaufwand für aufeinanderfolgende Bearbeitungsprozesse in einem Raumbereich zu reduzieren.

Die Erfindung wird nachfolgend anhand eines Ausführungsbeispiels mit den beigefügten Figuren erläutert. Es zeigen:
- Figur 1: - Blockdiagramm einer Einrichtung zur Zuweisung von Arbeitsressourcen;
- Figur 2: - Kommunikationsdiagramm zur Darstellung des Ablaufs der Steuerungsnachrichten für die Reservierung eines Bearbeitungsprozesses.

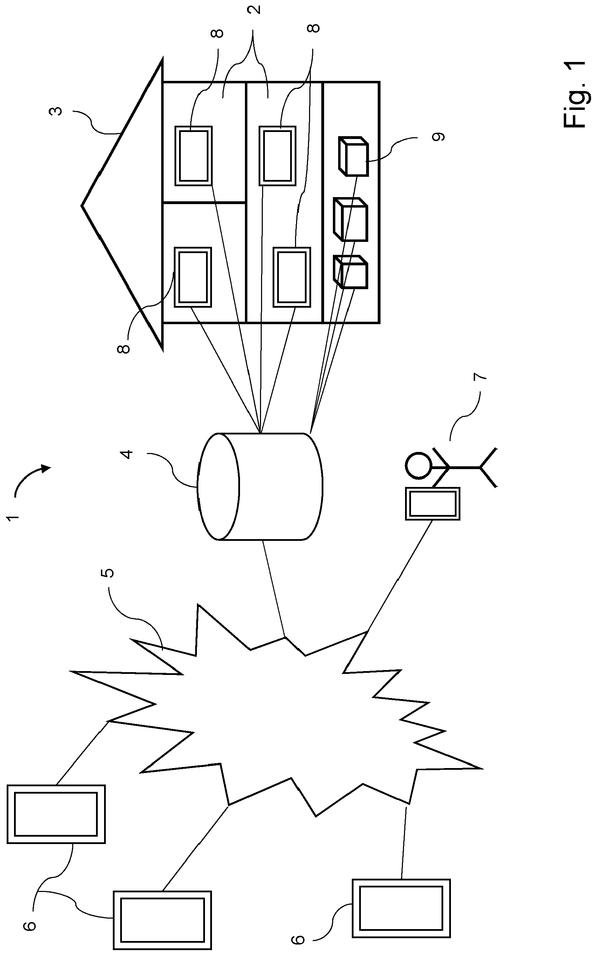

Figur 1 zeigt eine Einrichtung 1 zur Zuweisung von Arbeitsressourcen in einem Bearbeitungsprozess. Dabei sind mehrere Raumbereiche 2 in einem Gebäude 3 vorgesehen, in denen gleichartige Bearbeitungsprozesse gleichzeitig vorgenommen werden können. Um nun die Durchführung der Bearbeitungsprozesse mit den vorhandenen Arbeitsressourcen und die Ausnutzung der Raumbereiche 2 über die Zeit, insbesondere einen Arbeitstag, zu optimieren, müssen nun die verfügbaren Arbeitsressourcen optimal zusammengeführt werden.

Dies wird in der Fertigung regelmäßig dadurch realisiert, dass die Bearbeitungsprozesse zeitlich optimal geplant werden.

Die erfindungsgemäße Einrichtung 1 geht hingegen einen anderen Weg. Sie passt die Arbeitsressourcen an die von außen zeitlich vorgegebenen Bearbeitungsprozesse an und lehnt nur in dem Fall, dass ein Bearbeitungsprozess zu der gewünschten Zeit nicht durchgeführt werden kann, die Durchführung ab, was erst in diesem Ausnahmefall zur zeitlichen Verschiebung geplanter Bearbeitungsprozesse führt.

Hierzu hat die Einrichtung 1 eine zentrale Zuweisungseinheit 4, die über ein Datenübertragungsnetzwerk 5, wie insbesondere das Internet, drahtlos oder drahtgebunden mit entfernten Eingabeeinheiten 6 verbindbar ist. Die zentrale Zuweisungseinheit 4 ist zum Empfang von Reservierungsanforderungen der entfernten Eingabeeinheiten 6 zur Reservierung eines Bearbeitungsprozesses zu einem ausgewählten Zeitpunkt eingerichtet. Bei der Reservierung kann von den jeweiligen Eingabeeinheiten 6 auch mindestens eine zur Durchführung des Bearbeitungsprozesses gewünschte Arbeitsressource, wie insbesondere ein Arbeitsmittel 7, einschließlich bestimmter den Bearbeitungsprozess durchführender Personen vorgegeben werden.

Nach Empfang einer solchen Reservierungsnachricht für einen Bearbeitungsprozess zu einer ausgewählten Zeit (insbesondere Startzeit) übersendet die zentrale Zuweisungseinheit 4 eine Zuweisungsnachricht an mindestens ein Arbeitsmittel 7, das für den reservierten Bearbeitungsprozess erforderlich ist. Das Arbeitsmittel 7 prüft die Verfügbarkeit zu der reservierten Zeit. Damit wird die Einsatzplanung für die Arbeitsmittel 7 und deren Verfügbarkeit ebenso nicht zentral durch die zentrale Zuweisungseinheit 4 geplant und vorgegeben, sondern dezentral durch die einzelnen Arbeitsmittel 7 selbst. Wenn ein Arbeitsmittel 7, welches eine Zuweisungsnachricht erhalten hat, für den Zeitraum zur Durchführung des reservierten Bearbeitungsprozesses nicht verfügbar ist, dann übersendet das Arbeitsmittel 7 über das Datennetzwerk 5 eine Ablehnungsnachricht an die zentrale Zuweisungseinheit 4. Diese ist eingerichtet, die Ablehnungsnachricht an die entfernte Eingabeeinheit 6 zu übertragen, welche eine Reservierung des Bearbeitungsprozesses bei der zentralen Zuweisungseinheit 4 angefragt hat.

Andernfalls übersendet das Arbeitsmittel 7 eine Bestätigungsnachricht an die zentrale Zuweisungseinheit 4 und signalisiert damit die Verfügbarkeit zur Durchführung des Bearbeitungsprozesses in dem angefragten Zeitraum. Die zentrale Zuweisungseinheit 4 ist dann eingerichtet, die Zuweisung der Arbeitsressourcen für den empfangenen reservierten Bearbeitungsprozess nach Erhalt der Bestätigungsnachricht von dem reservierten Arbeitsmittel 7 festzulegen. Diese Festlegung kann dann in einem Datenspeicher der zentralen Zuweisungseinheit 4 abgespeichert werden. Hier kann beispielsweise für jeden Raumbereich die zu den geplanten Zeiträumen die Bearbeitungsprozesse abgelegt werden. Damit kann die zentrale Zuweisungseinheit 4 durch Auslesen der zeitbezogenen Zuweisungsinformationen für die Raumbereiche 2 nach Erhalt einer weiteren Reservierungsnachricht für einen weiteren Bearbeitungsprozess feststellen, ob noch Raumbereiche 2 für den angefragten Zeitraum verfügbar sind und wenn ja, welche.

Die Einrichtung 1 hat mindestens ein Display 8, in dem dann die Raumbereiche 2 mit diesen zugeordneten Arbeitsressourcen, Bearbeitungsprozessen und Zeiten durch die zentrale Zuweisungseinheit 4 angezeigt werden. Hierzu ist die zentrale Zuweisungseinheit 4 zur Aussendung von entsprechenden Steuerungsdaten an das mindestens eine Display 8 ausgebildet. Vorteilhaft ist es, wenn nicht nur ein zentrales Display 8 vorhanden ist, sondern in den einzelnen Raumbereichen 2 jeweils ein Display 8 vorhanden ist, in dem nur die für den Raumbereich 2 in einem Zeitraum reservierten Bearbeitungsprozesse ggf. mit den hierzu benötigten Arbeitsressourcen angezeigt werden.

Die zentrale Zuweisungseinheit 4 kann weiterhin zur Reservierung und Zuordnung weiterer in einem Lager zur Durchführung der Bearbeitungsprozesse verfügbar gehaltenen Arbeitsmittel 9 eingerichtet sein. Die Nutzung dieser Arbeitsmittel 9 und ggf. deren Verbrauch wird dann durch die zentrale Zuweisungseinheit 4 erfasst und in einem Datenspeicher zusammen mit dem zugeordneten Bearbeitungsprozess abgelegt.

Die zentrale Zuweisungseinheit 4 kann zudem durch ein geeignetes Computerprogramm eingerichtet sein, um die zugewiesenen Arbeitsressourcen nach der Zuweisung der Arbeitsressourcen zu einem Bearbeitungsprozess abzurechnen. Hierzu werden die für die Durchführung des Bearbeitungsprozesses kalkulierten Kosten den jeweiligen Arbeitsmitteln 7, 9, die zur Durchführung des Bearbeitungsprozesses benötigt werden, zugeordnet und über das Datennetzwerk 5 an diese übertragen. Die Arbeitsmittel 7, 9 sind somit dezentral für ihre eigenen Kosten verantwortlich und sammeln diese zur weiteren Auswertung und Abrechnung.

Die zentrale Zuweisungseinheit 4 hat vorzugsweise eine Datenverarbeitungseinheit, mindestens einen Datenspeicher und ein Computerprogramm, das zur Übersendung der unbeschriebenen Steuerungsinformationen über das Datennetzwerk 5 und an das mindestens eine Display 8 sowie zur Optimierung der Auslastung der Raumbereiche unter Ausnutzung der vorhandenen Arbeitsressourcen zur Durchführung der dezentral reservierten Bearbeitungsprozesse eingerichtet ist. Zur Optimierung der Auslastung der Raumbereiche 2 kann die zentrale Zuweisungseinheit 4 vorzugsweise eingerichtet sein, um für bereits zugewiesene Arbeitsressourcen reservierte Raumbereiche 2 vor der geplanten Durchführungszeit der Bearbeitungsprozesse so umzudisponieren, dass der Ausnutzungsgrad der verfügbaren Raumbereiche 2 erhöht wird. Dies kann insbesondere dadurch gelingen, dass ein Wechsel von Arbeitsressourcen zwischen Raumbereichen 2 für aufeinanderfolgende Bearbeitungsprozesse möglichst reduziert wird. Damit ist die zentrale Zuweisungseinheit 4 vorzugweise so eingerichtet, dass für aufeinanderfolgende Bearbeitungsprozesse genutzte gleiche Arbeitsmittel 7, 9 vorzugsweise in demselben Raumbereich 2 bleiben, so dass eine Wechselzeit durch Änderung des Raumbereichs 2 für aufeinanderfolgende Bearbeitungsprozesse von denselben Arbeitsressourcen vermieden wird.

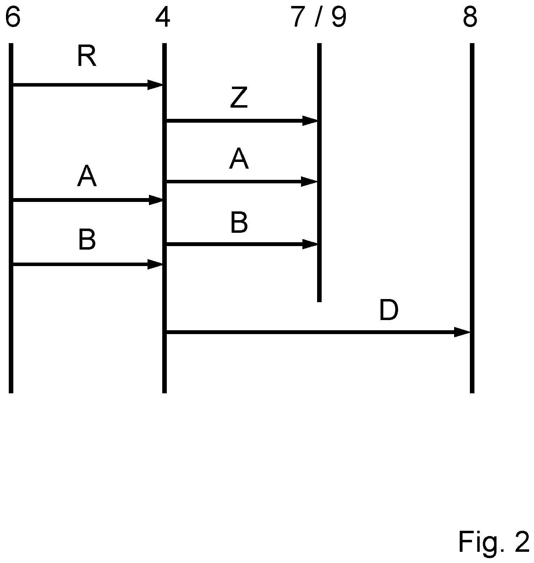

Figur 2 zeigt ein Kommunikationsdiagramm zur Darstellung des Ablaufs der Steuerungsnachrichten für die Reservierung eines Bearbeitungsprozesses. Zunächst wird von einer entfernten Eingabeeinheit 6 eine Reservierungsnachricht R zur Reservierung eines Bearbeitungsprozesses zu einem ausgewählten Startzeitpunkt an die zentrale Zuweisungseinheit 4 übersandt. Diese überträgt daraufhin eine Zuweisungsnachricht Z an das mindestens eine zur Durchführung des Bearbeitungsprozesses notwendige Arbeitsmittel 7, 9. Dort wird dann geprüft, ob das Arbeitsmittel Ressourcen zur Durchführung des Bearbeitungsprozesses in dem angefragten Zeitraum hat. Wenn keine Ressourcen verfügbar sind, übersendet das angefragte Arbeitsmittel 7, 9 eine Ablehnungsnachricht A an die zentrale Zuweisungseinheit 4, die wiederum eine Ablehnungsnachricht A an die entfernte Eingabeeinheit 6 zurücksendet. Dann muss die entfernte Eingabeeinheit 6 umdisponieren und prüfen, ob der gewünschte Bearbeitungsprozess zu einem anderen Zeitpunkt möglich ist.

Hierzu ist es denkbar, dass die zentrale Zuweisungseinheit 4 über das Datennetzwerk 5 den entfernten Eingabeeinheiten 6 eine Übersicht über die Zeiten der Verfügbarkeit der Arbeitsressourcen bereitstellt. Dies ermöglicht den entfernten Eingabeeinheiten 6 unnötige Reservierungsanfragen R zu Zeiträumen zu vermeiden, in denen der zentralen Zuweisungseinheit 4 schon bekannt ist, dass keine Arbeitsressourcen hierzu zur Verfügung stehen.

Für den Fall, dass das angefragte Arbeitsmittel 7, 9 zur Durchführung des Bearbeitungsprozesses in dem ausgewählten Zeitraum verfügbar ist, wird eine Bestätigungsnachricht B von dem Arbeitsmittel 7, 9 an die zentrale Zuweisungseinheit 4 übertragen. Daraufhin übersendet die zentrale Zuweisungseinheit 4 eine Bestätigungsnachricht B an die entfernte Eingabeeinheit, welche den Bearbeitungsprozess reserviert hat. Zudem wird gleichzeitig oder zeitversetzt, spätestens kurz vor der Durchführung des reservierten Bearbeitungsprozesses eine Steuerungsinformation S an das mindestens eine Display 8 übertragen, um dort die Reservierung der Raumbereiche 2 für die vorgeplanten Bearbeitungsprozesse und die Zuordnung der Arbeitsressourcen zu den Raumbereichen 2 in Abhängigkeit von den geplanten Zeitfenstern darzustellen. Damit werden die Arbeitsressourcen zur Durchführung des Bearbeitungsprozesses zeitlich gelenkt und die Ausnutzung der Raumbereiche 2 über die Zeit gesteuert.

## Patentansprüche

1. Einrichtung (1) zur Zuweisung von Arbeitsressourcen in einem Bearbeitungsprozess, wobei für gleichartige Bearbeitungsprozesse, die gleichzeitig vorgenommen werden können, mehrere Raumbereiche (2) vorhanden sind und Arbeitsmittel zur Bearbeitung in jeweils einen zugewiesenen Raumbereich (2) befördert werden,
**gekennzeichnet durch**
eine zentrale Zuweisungseinheit (4), die mit entfernten Eingabeeinheiten (6) zur Reservierung eines Bearbeitungsprozesses zu ausgewählten Zeiten verbindbar ist und die zur Übersendung von Zuweisungsnachrichten an für die reservierten Arbeitsressourcen erforderlichen Arbeitsmittel (7) und zur Festlegung der Zuweisung der Arbeitsressourcen an die empfangenen reservierten Bearbeitungsprozesse nach Erhalt mindestens einer Bestätigungsnachricht von den reservierten Arbeitsmitteln (7) eingerichtet ist.

2. Einrichtung (1) nach Anspruch 1, **dadurch gekennzeichnet, dass** die Einrichtung zur Abrechnung der zugewiesenen Arbeitsressourcen nach der Zuweisung der Arbeitsressourcen eingerichtet ist.

3. Einrichtung (1) nach Anspruch 1 oder 2, **dadurch gekennzeichnet, dass** die Einrichtung zur Reservierung und Abrechnung von Arbeitsmitteln für die zugewiesenen Arbeitsressourcen eingerichtet ist.

4. Einrichtung (1) nach einem der Ansprüche 1 bis 3, **dadurch gekennzeichnet, dass** die Einrichtung mindestens ein Display (8) hat und zur Anzeige der zugewiesenen Arbeitsressourcen zu der reservierten Zeit ausgebildet ist.

5. Einrichtung (1) nach einem der vorhergehenden Ansprüche, **dadurch gekennzeichnet, dass** in den Raumbereichen (2) jeweils mindestens ein Display (8) angeordnet ist, das zur Anzeige der dem Raumbereich zugewiesenen Arbeitsressourcen und der zugehörigen Zeit zur Durchführung der jeweiligen Bearbeitungsprozesse eingerichtet ist.

6. Einrichtung (1) nach einem der vorhergehenden Ansprüche, **dadurch gekennzeichnet, dass** die Einrichtung (1) zur Anpassung der für bereits zugewiesene Arbeitsressourcen reservierten Raumbereiche (2) derart eingerichtet ist, dass die Ausnutzung der Raumbereiche (2) erhöht und der Wechsel von Arbeitsressourcen zwischen Raumbereichen (2) für aufeinanderfolgende Bearbeitungsprozesse reduziert wird.
